# EUROPEAN PATENT APPLICATION

(11) **EP 4 492 225 A1**
(43) Date of publication of application: **15.01.2025**
(21) Application number: 23185409.2
(22) Date of filing: 13.07.2023
(51) Int. Cl.: G06F 8/65, G06F 9/48, H02J 13/00

(54) **METHOD AND SYSTEMS FOR CONTROLLING AN UPDATE OF DEVICES**

(71) Applicant: Hitachi Energy Ltd, 8050 Zürich (CH)
(72) Inventor: Dan, Andrei-Marian, 8112 Otelfingen (CH); Deck, Bernhard, 79809 Weilheim (DE); Sipowicz, Jakub, 30-348 Krakow (PL); Rejiba, Zeineb, 8064 Zurich (CH); Eidenbenz, Raphael, 8049 Zurich (CH)
(74) Representative: Meier, Florian

(57) **Abstract**

To control an update of machine-readable data processed by devices communicatively coupled to a Supervisory Control and Data Acquisition system (60), a fleet management system (80) communicatively interfaces with the Supervisory Control and Data Acquisition system (60).

## Description

### TECHNICAL FIELD

Embodiments of the invention relate to systems and methods operative to control an update of machine-readable data processed by devices communicatively coupled to a Supervisory Control and Data Acquisition (SCADA) system. Embodiments of the invention relate in particular to methods and systems that can be used to determine a schedule for the update of the machine-readable data (such as firmware) of the devices. Embodiments of the invention also relate to techniques of performing control actions related to an infrastructure system, such as an electric power system.

### BACKGROUND

Systems that comprise devices and a Supervisory Control and Data Acquisition (SCADA) system for monitoring and coordinating these devices are widely used. Such devices and SCADA systems may be implemented in an automation control system, such as an automation control system for use in industrial automation, electric power system automation (e.g. substation automation systems), or other infrastructure automation systems. Automation control systems are already widely used. Automation control systems provide improved control and operation of an infrastructure system (such as an electric power system) or an industrial system. Use of automation control systems is expected to further increase, in view of the capabilities provided by automation control systems and the devices thereof.

Each of the devices may be associated with a component of a primary system (such as an electric power system) to perform one or several functions, such as one or several protection functions. The devices may be communicatively coupled with each other and with the SCADA system.

The devices may further be coupled to a fleet management (FLM) system. The FLM system may be operative to maintain and monitor operational characteristics of the devices, such as processor loads, memory or storage usage, firmware version data, or other data related to the way in which the respective devices perform their intended functions.

It may be desirable to update machine-readable data processed by the devices after the devices coupled to the SCADA system have been configured and commissioned for field use and operate in field use. For illustration, it may be desirable to implement updates of machine-readable instruction code that may be processed by the devices to perform control, protection, and/or communication functions after the devices have started operating in field use. The FLM system may also be operative to initiate update processes for performing firmware or software updates of machine-readable code executed by the devices.

Updates of machine-readable data for fleets of devices is an important functionality and is likely to become even more important in the future. Update processes can be desirable to ensure that the latest security patches, functionality and/or improved performance are deployed to the devices in a timely and efficient manner. The accelerated digitalization process in the power system industry or other critical infrastructure and the cybersecurity challenges increase the need to support frequent firmware updates of the power system devices.

Conventionally, firmware updates in an electric power system or other critical infrastructure or industrial system require stopping the site functionality and effecting distribution and installation of the new firmware on the devices under the control of a human expert.

US 8 892 699 B2 discloses a method of automatically updating an existing firmware file stored in a memory of an intelligent electronic device (IED) communicatively coupled to a network in a monitoring system, in which an update is performed in response to the lED verifying that a first criterion (such as interoperability of the update with the existing firmware file) is satisfied.

EP 3 631 745 A1 discloses techniques of updating of software intended to be executed by equipment of an electrical distribution network.

Further improvements in performing updates automatically are desirable for various reasons. For illustration, it is desirable to perform such updates in a manner which enables the updates to be performed based on objective criteria, in a manner that reduces or eliminates errors caused by human experts, or in a manner that further enhances digitalization, and further reduces of cybersecurity risks.

An approach to further improve the installation of firmware updates is to use a FLM system. However, when implemented in a naive manner, use of a FLM system for triggering updates of machine-readable code may have shortcomings. For illustration, such an implementation of an update process may sometimes not adequately mitigate the risk of the devices to be updated being prevented from, or inhibited in, performing their customary and intended function due to installation of an update, at a time at which it is inappropriate for the device(s) to be unavailable for its or their intended functionality. Naive uses of FLM systems may also not be adequate to take into consideration the overall functional state of several devices, potentially including redundant function implementations.

Thus, there is still a need for improved techniques of updating machine-readable data (such as installing software or firmware updates) for devices that are coupled to a SCADA system.

### SUMMARY

It is an object of the invention to provide methods and systems that provide enhanced techniques of updating machine-readable data of devices coupled to a Supervisory Control and Data Acquisition (SCADA) system. It is an optional object of the invention to provide methods and systems that mitigate the risk of the updates being performed incorrectly or incompletely due to an unsuitable timing of the update installation. It is an optional object of the invention to provide methods and systems that mitigate the risk of the update installation being performed incorrectly or incompletely due to errors caused by human scheduling.

According to exemplary embodiments, methods and systems as recited in the claims are provided.

According to an aspect of the invention, there is provided a method of controlling an update of machine-readable data processed by devices communicatively coupled to a Supervisory Control and Data Acquisition (SCADA) system. The method comprises determining, by a fleet management, FLM, system, a device set of the devices, wherein the device set comprises devices to be updated. The method comprises communicatively interfacing, by the FLM system, with the SCADA system to establish an update sequence for the devices included in the device set. The method comprises triggering, by the FLM system, update processes for the devices included in the device set based on the established update sequence.

Various effects and advantages are attained by the method. By communicatively interfacing with the SCADA system, the FLM system is enabled to perform the update of the several devices of the device set in a manner which takes into account criticality and/or operational status information of the devices in the firmware update process, based on an interaction between the FLM and the SCADA system.

Communicatively interfacing by the FLM system with the SCADA system to establish the update sequence may comprise: generating, by the FLM system, first data comprising information on the devices to be updated included in the device set; outputting, by the FLM system, the first data via at least one data interface; receiving, by the FLM system, second data from the SCADA system via the at least one data interface, the second data comprising information on at least a subset of the device set; and establishing, by the FLM system, the update sequence based on the second data.

Thereby, the FLM system can specify which of the devices are to be updated. The set of devices specified by the first data may consist of the devices to be updated. The FLM system can use the information provided by the SCADA system, which takes into account criticality and/or operational state of the devices, to trigger the update processes. Thus, the update processes may be implemented under the control of the FLM system, but taking into consideration data such as criticality and/or operational state of the devices that is available to the SCADA system but not the FLM system.

The first data may comprise identifiers for all devices to be updated.

Thereby, the FLM system can specify the set of devices for which the update is to be performed. The set may comprise all devices for which, based on firmware data maintained by the FLM system, an updated firmware version is available.

The first data may comprise estimated update durations.

This allows the SCADA system to take into consideration the estimated update durations when determining whether and which devices may be put to maintenance mode without affecting system safety. The FLM system can thereby enforce that the estimated update durations be taken into consideration when establishing the sequence in which devices are to be updated.

The FLM system may be operative to determine the estimated update durations based on data or metadata defining the update to be performed and historical update reports. The FLM system may comprise a storage system storing the historical update reports. The FLM system may access the historical update reports to determine the estimated update durations and generate the first data.

Thereby, the FLM system can enforce the estimated update durations to be taken into consideration when establishing the sequence in which devices are to be updated.

The second data may define several subsets of the devices to be updated.

This allows the updates to be implemented in a group-wise manner, with one subset being updated after another subset.

The second data may define an ordered list of several subsets of the devices to be updated to define the update sequence.

Thereby, at least part of the update sequence can be specified in an efficient manner.

The second data may comprise a plurality of messages received from the SCADA system, wherein each of the messages defines one of the subsets.

Thereby, at least part of the update sequence can be specified in an efficient manner.

Receipt of a message of the plurality of messages may cause the FLM system to trigger the update process for the subset defined by the message.

Thereby, the FLM system is enabled in an efficient manner to determine the start time at which the update processes are to be triggered. It is possible but not absolutely required that timing information be included in the second data when receipt of the message triggers the update process for the devices specified by one of the messages.

Communicatively interfacing by the FLM system with the SCADA system to establish the update sequence may comprise: retrieving, by the FLM system, device status data for the devices included in the device set from a storage system of the SCADA system or accessible to the SCADA system.

Thereby, the FLM system can retrieve data defining the criticality and/or operational state of the devices to be updated from the SCADA storage system. The FLM system can explicitly take into consideration the criticality and/or operational state of the devices when determining the update sequence.

The FLM system may establish the update sequence based on the retrieved device status data.

Thereby, the FLM system can retrieve data defining the criticality and/or operational state of the devices to be updated from the SCADA storage system.

Determining the update sequence may comprise determining which devices are presently set to an inoperative state such as maintenance mode. Determining the update sequence may optionally comprise determining which of the devices will remain in an inoperative state such as maintenance mode for at least an estimated update duration. Such devices may be included in a subset for which the update process is to be triggered.

Thereby, devices that are presently not critical for safe system operation may be updated. Devices that are in an operative state in which they are critical for system operation are prevented from being updated.

Determining the update sequence may comprise determining for which devices there is a redundant implementation of all safety-critical functions performed by the respective devices. Such devices may be included in a subset for which the update process is triggered.

Thereby, devices for which there exist redundant implementations for all safety-critical functions may be updated without adversely affecting system safety. Devices that have at least one safety-critical function for which there is no redundant implementation may be prevented from being updated. Operation safety is thereby enhanced.

The method may further comprise receiving, by the FLM system, update reports via the at least one data interface.

Thereby, the FLM system can monitor and record the update progress.

The method may further comprise providing, by the FLM system, an aggregated update report aggregated from the received update reports to the SCADA system via the at least one data interface.

This allows the FLM system to inform the SCADA system of the update progress, in particular of the updates that have been completed successfully, causing some of the devices to operate with a different firmware.

The devices may comprise devices of an automation control system.

Thereby, updates may be controlled in an automated manner for devices of automation control systems, for which firmware updates or other updates are of particular importance.

The automation control system may comprise an electric power system automation control system. The devices may comprise devices of the electric power system automation control system.

Thereby, updates may be controlled in an automated manner for devices of electric power system automation control system, for which firmware updates or other updates are of particular importance.

The update may comprise a firmware update.

Thereby, the techniques disclosed herein may be used for installing firmware updates.

The method may further comprise performing, by the FLM system or a distribution server, a transfer of the updates of machine-readable data to the plurality of devices in accordance with the update sequence. The updates of machine-readable data may be transferred to each of the plurality of devices at a time determined in accordance with the update sequence.

Thereby, the transfer of the machine-readable data to the plurality of devices can be implemented in accordance with the update sequence that has been determined automatically by the FLM system cooperating with the SCADA system.

The method may further comprise processing, by the each of the plurality of devices, the transferred update of the machine-readable data at a time determined in accordance with the determined update sequence.

Thereby, the installation of the updates is implemented in accordance with the update sequence.

Determining the update sequence may comprise determining a schedule for a distribution of the update and a schedule for the installation of the update.

Thereby, both the transfer of the update of the machine-readable data and the installation of the update may be performed based on and in accordance with the schedules determined by the FLM system in coordination with the SCADA system.

The update may comprise an update executable instruction code or an update of executable instruction code. The update of executable instruction code may be an update of software or firmware persistently stored in the devices to be updated. Different types of devices may have stored therein different types of executable instruction code. The techniques disclosed herein are applicable accordingly to each of these different types of executable instruction code. I.e., not all of the devices need to receive the same update.

Thereby, updates of firmware or software of the devices may be performed in a coordinated manner, optionally also taking into account past, present, and/or forecast future state of a primary system with which the devices are associated.

The method may further comprise updating, by the devices, software or firmware executed by the devices based on the update.

Thereby, the techniques may be applied to modifying device operation by performing updates of software or firmware.

Updating the software or firmware may comprise updating at least one protection function logic related to a primary system (e.g., an electric power system). The at least one protection function logic may comprise a distance protection or time-domain protection, without being limited thereto.

Thereby, the techniques may be applied to modifying a decision logic executed by the devices to perform protection functions related to the primary system.

Transferring the update may comprise transferring the update over a packetized communication link or communication network. Alternatively or additionally, transferring the update may comprise transferring the update over communication links in accordance with IEC 61850.

Thereby, communication links or other communication infrastructure of intra- or inter-substation communication in accordance with IEC 61850 may be leveraged to transfer the updates to devices.

The devices may comprise protection relays or other intelligent electronic devices (lEDs) that perform protection functions or other functions for an infrastructure system, in particular an electric power system.

Thereby, updates of such protection devices, which are particularly critical to ensure safe operation of an electric power system, may be performed in a manner which mitigates the risk of the update being performed at a time which is inappropriate in view of electric power system safety.

According to another aspect, there is provided a method of controlling operation of an automation control system comprising a plurality of devices. The method comprises executing, by the devices of an automation control system, instruction code to perform functions related to an infrastructure system (e.g., an electric power system), and performing the method of controlling the update of machine-readable data according to any aspect or embodiment to update the devices of the automation control system during field operation of the automation control system.

Thereby, the risk of the automation control system update process interfering in an undesirable manner with safe operation of the infrastructure system is mitigated. Operation safety of the infrastructure system is enhanced.

According to another aspect, there is provided a method of controlling an infrastructure system. The method comprises controlling, by devices of an automation control system, equipment of the infrastructure system, and performing the method of controlling the update of machine-readable data according to any aspect or embodiment to update the devices of the automation control system during field operation of the automation control system.

Thereby, the risk of the automation control system update process interfering in an undesirable manner with safe operation of the infrastructure system is mitigated. Operation safety of the infrastructure system is enhanced.

The infrastructure system may comprise an electric power system.

Thereby, the risk of the automation control system update process interfering in an undesirable manner with safe operation of the electric power system is mitigated. Operation safety of the electric power system is enhanced.

The electric power system may comprise one or several of a power generation system, a power transmission system, a power distribution system. The electric power system may comprise renewable energy resources coupled to at least some buses of an electric power grid.

Thereby, operation safety is enhanced for the electric power system.

According to another aspect of the invention, there is provided instruction code which, when executed by at least one processing circuit, causes execution of the method according to any one aspect or embodiment.

The effects attained thereby correspond to the effects and advantages disclosed in association with the method.

According to another aspect of the invention, there is provided a non-transitory storage medium having stored thereon instructions which, when executed by at least one processing circuit, causes execution of the method according to an aspect or embodiment.

The effects attained thereby correspond to the effects and advantages disclosed in association with the method.

According to another aspect of the invention, there is provided a fleet management (FLM) system for controlling an update of machine-readable data processed by devices of an automation control system. The devices are communicatively coupled with a Supervisory Control and Data Acquisition (SCADA) system. The FLM system comprises at least one data interface. The FLM system comprises at least one processing circuit operative to determine a device set of the devices, wherein the device set comprises devices to be updated. The at least one processing circuit is operative to control the at least one data interface to communicatively interface the FLM system with the SCADA system to establish an update sequence for the devices included in the device set. The at least one processing circuit is operative to trigger update processes for the devices included in the device set based on the established update sequence.

Various effects and advantages are attained by the FLM system. By communicatively interfacing with the SCADA system, the FLM system is enabled to perform the update of the several devices of the device set in a manner which takes into account criticality and/or operational status information of the devices in the firmware update process, based on an interaction between the FLM and the SCADA system.

The FLM system may be operative to perform the method of any aspect or embodiment disclosed herein. Thus, optional features of the FLM system correspond to the optional features of the method disclosed herein, with the processing operations being performed by or using the at least one processing circuit of the FLM system.

According to another aspect of the invention, there is provided an electric power system. The electric power system comprises an automation control system comprising a plurality of devices operative to process machine-readable data. The electric power system comprises a Supervisory Control and Data Acquisition (SCADA) system operative to be communicatively coupled to the plurality of devices. The electric power system comprises the FLM system according to an aspect or embodiment and operative to be communicatively coupled to the SCADA system.

Thereby, the system attains the advantages and effects disclosed in association with the FLM system and methods according to various embodiments.

The FLM system may be operative to generate first data comprising information on the devices to be updated included in the device set, transmit the first data to the SCADA system, receive second data from the SCADA system, the second data comprising information on several subsets of the device set, and establish the update sequence based on the second data.

Thereby, the FLM system can specify which of the devices are to be updated. The set of devices specified by the first data may consist of the devices to be updated. The FLM system can use the information provided by the SCADA system, which takes into account criticality and/or operational state of the devices, to trigger the update processes. Thus, the update processes may be implemented under the control of the FLM system, but taking into consideration data such as criticality and/or operational state of the devices that is available to the SCADA system but not the FLM system unless it communicatively interfaces with the SCADA system.

The SCADA system may be operative to receive the first data, retrieve, based on the information on the devices to be updated included in the first data, device status data for at least the devices to be updated, determine, based on the device status data, the several subsets of the device set to specify the update sequence, generate the second data based on the determined several subsets, and transmit the second data to the FLM system.

Thereby, the FLM system is enabled in an efficient manner to determine the start time at which the update processes are to be triggered. It is possible but not absolutely required that timing information be included in the second data when receipt of the message triggers the update process for the devices specified by one of the messages.

The FLM system may be operative to retrieve device status data for the devices included in the device set from a storage system of the SCADA system or accessible to the SCADA system.

Thereby, the FLM system can retrieve data defining the criticality and/or operational state of the devices to be updated from the SCADA storage system. The FLM system can explicitly take into consideration the criticality and/or operational state of the devices when determining the update sequence.

The FLM system may be operative to establish the update sequence based on the retrieved device status data.

Thereby, the FLM system can retrieve data defining the criticality and/or operational state of the devices to be updated from the SCADA storage system.

The SCADA system may be operative to receive the first data from the FLM system, determine an update sequence for the devices included in the device set, and generate and provide the second data that defines an update sequence for the devices to be updated.

Thereby, the SCADA system cooperating with the FLM system can ensure that criticality and/or operational states of devices to be updated is taken int account when determining the update sequence.

The SCADA system may determine the update sequence based on criticality of the devices defined by the received data for operation of an automation control system.

Thereby, operation safety is enhanced.

The SCADA system may be operative such that the first data received from the FLM system further comprises duration data defining estimated update durations for at least some of the devices to be updated, wherein the SCADA system is operative to determine the update sequence based on the estimated update durations.

This allows the SCADA system to take into consideration the estimated update durations when determining whether and which devices are to be put into maintenance mode without affecting system safety. The FLM system can thereby enforce that the estimated update durations be taken into consideration when establishing the sequence in which devices are to be updated.

The SCADA system may be operative such that the SCADA system determines the update sequence based on one or both of: presence of redundant function implementations of functions performed by the devices defined by the device set and/or device status.

Thereby, the SCADA system cooperating with the FLM system can ensure that criticality and/or operational states of devices to be updated is taken into account. Operation safety is enhanced.

The SCADA system may be operative such that the SCADA system determines the update sequence such that a subset of the device set to be updated first includes devices for which the device status is an inactive device status and devices having redundant function implementations of device functions executed by the devices.

Thereby, devices that are in or can be placed into maintenance mode for installing an update without affecting system safety may be identified and updated.

The SCADA system may be operative to determine a sequence of control actions to be performed in a manner coordinated with the update sequence, and to perform the sequence of control actions to allow the devices to be updated.

Thereby, control actions may be performed under the control of the SCADA system in a manner which is coordinated with the triggering of update processes by the FLM system.

The sequence of control actions may comprise commands that cause at least one of the devices to enter a maintenance mode.

Thereby, the devices may be controlled by the SCADA system in a manner which is coordinated with the triggering of update processes by the FLM system.

The sequence of control actions may comprise commands that cause components of a primary system (such as electric power system components, e.g., switchgear, transformers, tap changers, and/or other primary system components) to change their states.

Thereby, the primary system may be influenced in such a manner that the devices controlled by the SCADA system can be safely updated.

The SCADA system may be operative such that the first data comprises identifiers for all devices to be updated.

Thereby, the FLM system can specify the set of devices for which the update is to be performed. The set may comprise all devices for which, based on firmware data maintained by the FLM system, an updated firmware version is available.

The SCADA system may be operative such that the second data defines an ordered list of a plurality of subsets of the device set to define the update sequence.

Thereby, the sequence can be specified in an efficient manner.

The SCADA system may be operative such that the second data comprises a plurality of messages provided by the SCADA system to the FLM system, wherein each of the messages defines one of the subsets.

Thereby, the FLM system is enabled in an efficient manner to determine the start time at which the update processes are to be triggered. It is possible but not absolutely required that timing information be included in the second data when receipt of the second data triggers the update process for the devices specified by one of the messages.

The SCADA system may be operative to receive update reports from the FLM system.

This allows the SCADA system to remain informed of the update progress, in particular of the updates that have been completed successfully, causing some of the devices to operate with a different firmware.

The SCADA system may adjust control of the devices based on the received updated reports.

This allows the current firmware version to be taken into account when the SCADA system interacts with the devices.

The system may further comprise a communication system by which the devices, the FLM system, and the SCADA system are communicatively coupled. The FLM system may be operative to establish the update sequence based on a bandwidth usage within the communication system, optionally based on a bandwidth usage by each of the devices.

Thereby, the update sequence may be determined in such a manner that there is no risk of consuming communication benefits at times at which they are required for other purposes.

The communication system may comprise a communication system operative in accordance with IEC 61850.

Thereby, the high requirements imposed on automation control systems associated with a critical infrastructure system are insured with regard to the implementation of the communication.

The system may further comprise an infrastructure system (e.g., an electric power system). The devices may be associated with the infrastructure system. The devices may perform protection and/or other control functions associated with primary equipment of the infrastructure system (such as primary components of an electric power grid).

Thereby, the effects and advantages attained by the techniques disclosed herein are leveraged for an automation control system of an infrastructure system.

The automation control system may be operative to control primary system components of the infrastructure system.

Thereby, the effects and advantages attained by the techniques disclosed herein are leveraged for providing enhanced control and operation of an infrastructure system.

The infrastructure system may comprise an electric power system, such as a portion of an electric power grid. For illustration, the infrastructure system may comprise an electric power transmission system and/or an electric power distribution system and/or an electric power generation system.

Thereby, the techniques disclosed herein and the effects and advantages are attained thereby are leveraged for improving operation of an infrastructure system that is an electric power system, an example for a critical infrastructure system.

The system may further comprise a source clock. The FLM system, SCADA system, and devices may be operative such that the updates are performed with a timing established with reference to a time provided by the source clock.

Thereby, consistency with regard to a reference time, relative to which the at least one schedule is determined and implemented, is insured.

Various effects and advantages are attained by embodiments of the invention. For illustration, the systems and methods according to embodiments provide enhanced techniques of controlling updates of devices communicatively coupled to a SCADA system. The interaction capabilities of the FLM system and SCADA system allow the updates to be installed in an automated manner while taking into consideration criticality and/or operational states of the devices when deciding on the update sequence. The methods and/or systems mitigate the risk of the updates being performed incorrectly or incompletely due to an incorrect timing. The methods and systems mitigate the risk of the updates being performed incorrectly or incompletely due to errors caused by human scheduling.

The systems and methods can be used in association with an electric power grid or sub-systems thereof, such as a power system substation, without being limited thereto.

### BRIEF DESCRIPTION OF THE DRAWINGS

Embodiments of the invention will be described with reference to the drawings in which similar or identical reference signs designate elements with similar or identical configuration and/or function.
Figure 1 is a schematic diagram of a system comprising a fleet management system and Supervisory Control and Data Acquisition system useful in controlling device updates.
Figure 2 is a block diagram of the fleet management system.
Figure 3 is a block diagram of the Supervisory Control and Data Acquisition system.
Figure 4 is a block diagram of a processing function performed by the fleet management system and/or the Supervisory Control and Data Acquisition system.
Figure 5 is a flow chart of a method.
Figure 6 is a flow chart of a method.
Figure 7 is a block diagram of an automation control system device.
Figure 8 is a schematic representation of a device set and device subsets.
Figure 9 is a signaling diagram of a system.
Figure 10 is a flow chart.
Figure 11 is a block diagram of a further fleet management system.
Figure 12 is a further signaling diagram of a system.
Figure 13 is a flow chart.

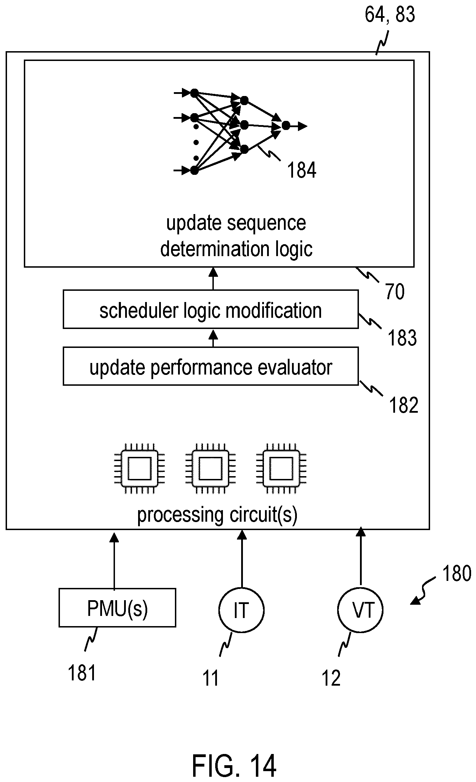

Figure 14 is a block diagram of processing performed by the fleet management system and/or the Supervisory Control and Data Acquisition system.
Figure 15 is a schematic diagram of a system comprising a processing system operative to determine schedule(s).
Figure 16 is a flow chart of a method.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to methods and systems useful in controlling an update of devices communicatively coupled with a Supervisory Control and Data Acquisition (SCADA) system.

While embodiments will be described in detail primarily in association with automation control systems for electric power systems, the embodiments disclosed herein are not limited thereto. The embodiments may be operative to control updates of devices for a wide variety of different systems comprising devices coupled to a SCADA system.

While embodiments will be described in detail in which the update of machine-readable data is an update of software or firmware of the devices, the embodiments may also be applied to other types of data.

Methods and systems disclosed herein are useful in controlling an update of machine-readable code, in particular firmware, of devices communicatively coupled with a SCADA system. The update process is triggered by a fleet management (FLM) system separate from the SCADA system. The FLM system and SCADA system are operative to communicatively interface to determine a sequence, optionally a timing, at which update processes are performed for devices communicatively coupled to the SCADA system.

As used herein, controlling an update process comprises at least controlling (e.g., triggering or otherwise scheduling) an installation time of an update. Controlling the update process may also comprise controlling (e.g., triggering or otherwise scheduling) a transfer of update data to the devices.

As used herein, the term SCADA system refers to a computing system operative to control operation of the devices to coordinate, control, or otherwise support functions that the devices have, e.g., in operating primary devices of an infrastructure system (such as an electric power system). The SCADA system is operative to receive and keep a record of device status (such as an inoperative state, e.g., a maintenance state, and operative state) of a plurality of, preferably all, devices of an automation control system. The SCADA system may be operative to cause devices to transition from a fully operative state to maintenance state and vice versa.

As used herein, the term FLM system refers to a computing system operative to maintain data relating to firmware currently deployed on the devices that are communicatively coupled to the SCADA system. The devices are typically also communicatively coupled with the FLM system to allow the FLM system to record data relating to, e.g., hardware usage by the devices, the installed firmware, and optionally previous firmware updates of the devices. The FLM system is operative to trigger the devices to perform an update process, in particular a firmware update process. The FLM system may generate and issue commands to trigger the update process. The FLM system may also be operative to control the distribution of update data to the devices.

The devices may be devices of an automation control system. As used herein, an automation control system encompasses an automation control system that operates in a manner compatible with or in accordance with IEC 62443 (in particular the version of IEC 62443 as in force on the priority or filing date of this application).

As used herein, the devices of an automation control system may in particular comprise intelligent electronic devices (IEDs), such as lEDs operative in accordance with IEC 61850 (in particular the version of IEC 61850 as in force on the priority or filing date of this application).

As used herein, terms such as "modifying" or "modification" of the devices encompass a device modification by way of update of software or firmware code executed by the devices. The update may affect the control logics executed by the device(s) to perform protection or other functions, and/or may affect other operational aspects of the device(s), such as cybersecurity-related function(s).

The devices may be operative to process measurements captured using measurement instrumentation and perform one or several protection or other control functions. Examples for such devices comprise - in the context of electric power systems - protection relays. The devices may comprise at least some devices operative to trigger or otherwise operate primary equipment (such as switchgear) of an infrastructure system.

As used herein, the term "infrastructure system" encompasses a critical infrastructure system, such as an electric power generation, transmission, and/or distribution system, e.g., an electric power grid or parts thereof. Other examples of such infrastructure systems include fresh water supply or gas or oil storage, transmission, and/or distribution systems.

As used herein, the term "power grid" encompasses a power transmission grid and/or a power distribution grid. The power grid may comprise both a power transmission grid and a power distribution grid.

As used herein, the term "power" refers to electric power unless explicitly stated otherwise.

The techniques disclosed herein are operable to mitigate the risk that a device communicatively coupled to the SCADA system is taken out of its fully operational state for installing an update at a time at which the device is critical for safe operation. As used herein, the term "critical" or "criticality" of a device refers to the device being required to ensure safe operation of, e.g., an automation control system and/or a primary system with which the automation control system is associated. Examples of devices that are not critical are devices that have redundant implementations of all their safety-critical functions and devices that are associated with a presently unused or little used part of the primary system (such as a part of an electric power system that does not have current or power flow or that has little current or power flow).

The invention provides methods and systems useful for controlling an update of machine-readable data processed by devices of an automation control system. The invention provides a communicative interaction of the FLM system and the SCADA system to include criticality and/or operational status information of the devices in a firmware update process, taking advantage of the interaction between the FLM and the SCADA system.

Embodiments of the invention thereby address the need for improved techniques of controlling updates of the devices coupled to the SCADA system.

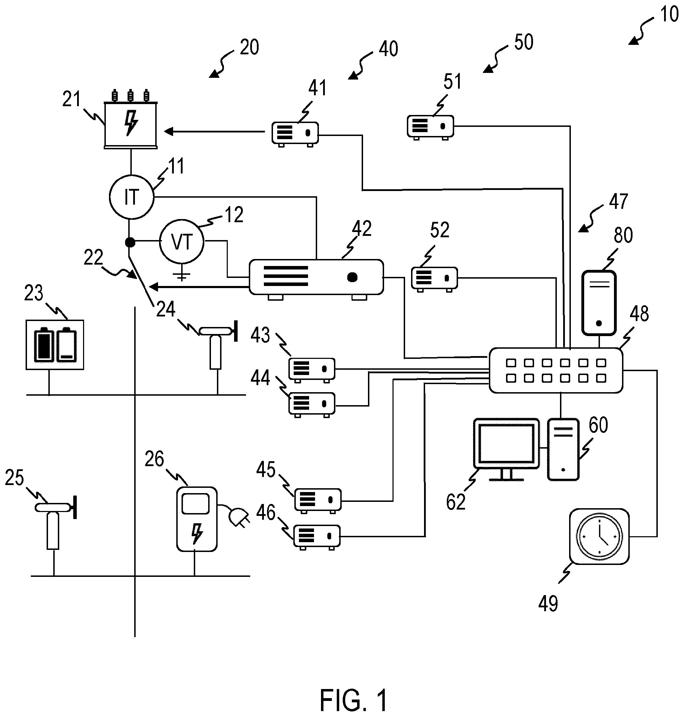

Figure 1 is a schematic representation of a system 10 according to an embodiment. The system 10 comprises a primary system 20. The primary system 20 may be or may comprise an electric power system, such as an electric power generation, transmission, and/or distribution system. The primary system 20 may comprise at least part of an electric power grid.

The system 10 comprises an automation control system 40. The automation control system 40 comprises a plurality of devices 41 to 46. At least some of the devices of the automation control system 40 are operative to perform protection functions or other functions that involve a control of components of the primary system 20, such as switchgear 22 or a transformer 21. At least some of the devices of the automation control system 40 may be operative to execute a decision logic based on measurements, such as measurements received from measurement instrumentation, which may include a current transformer 11, a voltage transformer 12, and/or phasor measurement units. Examples for devices of the automation control system comprise protection relays or other lEDs which may be operative to perform distance protection or time protection or other protection functions.

The system 10 comprises a redundancy system 50 which provides redundant implementations for at least some of the functions performed by the devices of the automation control system 40. The redundancy system 50 may be implemented in various ways. For illustration, there may be a dedicated redundant device associated with each one of the devices of the automation control system 40 in a one-to-one-correspondence. Other implementations are possible. For illustration, there may be a centralized redundancy system which may be provided at the substation level and which may provide redundancy for functions performed by several devices of a substation automation (SA) system.

The system 10 comprises a communication system 47. The communication system 47 may be or may comprise a communication network. The communication system 47 may comprise a plurality of communication links by which devices of the automation control system 40 communicate with each other and/or with central systems, such as a SCADA system 60 and a FLM system 80. Communication may be performed using communication devices such as gateway devices 48.

As will be described in more detail below, the system 10 comprises the SCADA system 60 and the FLM system 80. The FLM system 80 and the SCADA system 60 are operative to cooperate with each other to determine a sequence in which devices of the automation control system 40 are to be updated when updates are available for such devices.

The interaction of the FLM system 80 and the SCADA system 60 may be realized in various ways.

In one implementation, the FLM system 80 may provide information on the devices to be updated to the SCADA system 60. The SCADA system 60 may determine, using the information available to it and taking into consideration the criticality and/or operational states of the devices, in which sequence the update processes may be initiated. This may be done in an ongoing manner, with the SCADA system 60 determining, at each of several points in time, which of the devices are in an operational state that allows them to be updated without affecting system safety and/or which of the devices can be put into a maintenance state because there are operative redundant implementations of all critical functions performed by the devices. The SCADA system 60 may then provide information on a subset of the devices to be updated to the FLM system 80, and the FLM system 80 can trigger the update process (e.g., by instructing the devices to install the update and/or distributing the update before installation). The SCADA system 60 may determine and execute control operations that may be interleaved with the actions performed by the FLM system 80, such as instructing devices to enter maintenance mode and instructing devices to revert to fully operative mode after an update has been successfully completed. The control operations (also referred to as control actions) may also comprise control operations that affect the primary switchgear, such as activating a redundant (or backup) part of the electric power system while placing another part of the electric power system into a mode in which it is at least partially deenergized and in which the devices associated with the primary equipment thereof can be updated.

In another implementation, which may be implemented alone or in combination with the previous implementation, the FLM system 80 may request data from the SCADA system 60, which relates to the criticality and/or operational state of the devices to be updated. For illustration, the FLM system 80 may request the SCADA system 60 to provide operational states (operative / maintenance mode) for the devices to be updated, operational states (operative / maintenance mode) for devices that run redundant function implementations of functions of the devices to be updated, and/or information on whether the redundant function implementations are presently active. The FLM system 80 may use this data to determine which devices may be updated, taking into account the criticality and/or operational states, and may trigger the update processes. The FLM system 80 may coordinate with the SCADA system 60 to ensure that the SCADA system 60 causes devices to be set to maintenance mode if required for installing the update.

In yet other implementations, which may be implemented alone or in combination with the previous implementations, one of the SCADA system 60 or FLM system 80 may determine a schedule defining at which time which subsets of devices are to be updated, with the schedule being communicated to the other one of the SCADA system 60 or FLM system 80. To ensure a consistent timing reference to be used by the SCADA system 60, the FLM system 80, and the devices of the automation control system 40 may implement an update according to the with reference to a time provided by a source clock 49. The source clock 49 may be the source clock used by the devices of the automation control system 40 in the normal field operation, i.e., to perform protection or other functions. The source clock 49 may be operative in accordance with the precision time protocol IEEE 1588.

As will be described in more detail below, the SCADA system 60 and FLM system 80 are operative to interact with each other to mitigate the risk of an update process being triggered for a device that is critical for device operation (e.g., in the sense that (a) it is in an operational state different from maintenance mode and (b) it performs at least one function that is critical for primary system operation and for which there is no redundant function implementation).

By using a communicative coupling between the SCADA system 60 and FLM system 80, in the manner further detailed herein, the times at which update installations are triggered by the FLM system 80 can take into account data (such as presence of redundant function implementations and/or operational states) available to the SCADA system 60, which can be harnessed by the FLM system 80 by virtue of the techniques disclosed herein.

As noted above, a field of application of the techniques disclosed herein is automation control systems for a primary system 20 that is or comprises an electric power system, such as a power grid or a sub-portion thereof. For illustration, and as schematically indicated in Figure 1, the electric power system may comprise primary components such as a power transformer 21, switchgear 22 (such as a circuit breaker or switch), renewable energy resources 24, 25 which may be coupled to buses of the electric power system by inverters, an energy storage systems such as a battery energy storage systems 23, or a time coupling equipment such as a charging station 26.

However, the techniques disclosed herein are not limited to electric power systems but may also be applied to automation control systems used with other infrastructure systems, such as hydraulic or pneumatic systems. The techniques disclosed herein may also be used in association with industrial automation control.

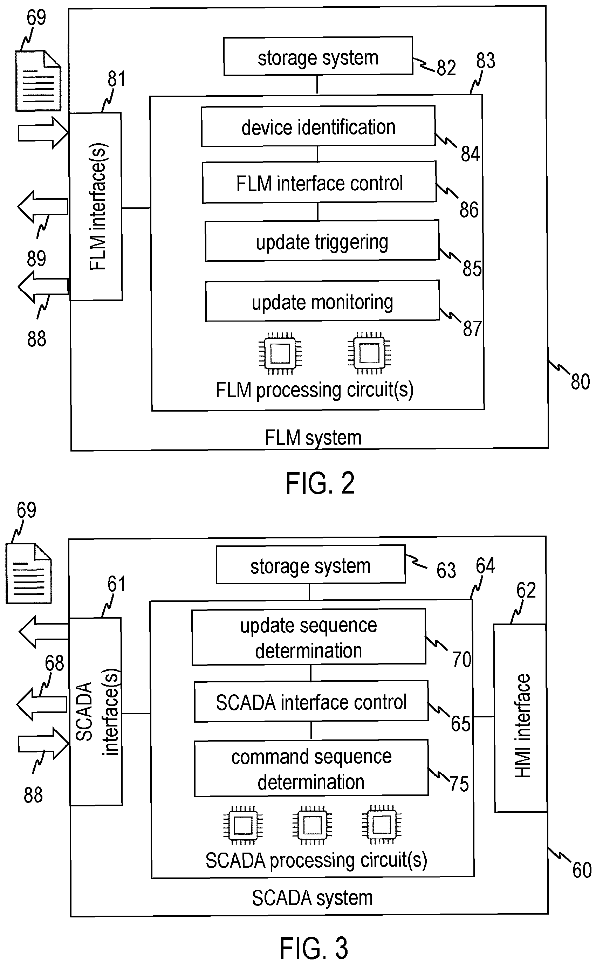

Figure 2 shows a block diagram representation of the FLM system 80. The FLM system 80 comprises at least one (i.e., one or several) FLM system interface 81. The at least one FLM system interface 81 may be operative to output first data 88 defining a device set of devices to be updated. The first data 88 may optionally also comprise estimated update durations. The FLM system 80 may be operative to transmit the first data to the SCADA system 60. The at least one FLM system interface 81 may be operative to receive second data 69, with the FLM system 80 being operative to use the second data 69 to establish a sequence (and optionally specific times) at which devices communicatively coupled to the SCADA system 60 are to be updated. The at least one FLM system interface 81 may be operative to receive the second data 69 from the SCADA system 60. The at least one FLM system interface 81 may be operative to generate and output commands 89 to trigger devices communicatively coupled to the SCADA system 60 (and communicatively coupled to the FLM system 80) to perform an update, e.g., by retrieving a firmware update and/or starting an installation process of the firmware update.

The FLM system 80 may optionally comprise a human machine interface (HMI). The FLM system 80 may be operative such that information generated based on the second data may be output also via the HMI.

The FLM system 80 may comprise a FLM storage system 82. The FLM storage system 82 may have stored therein data or metadata relating to the updates available (such as metadata defining the size of each update), data specifying which firmware version is presently installed on each of the devices, and/or data specifying hardware configurations and/or hardware usage by the devices. The FLM storage system 82 may also have stored therein data on historical update processes (such as historical update durations stored in association with the update data size and/or hardware configuration of the devices on which the updates were installed), which may be used by the FLM system 80 to determine the estimated update durations, using, for example, techniques such as regression (e.g., multivariate regression). The FLM system 80 may also be operative to store data relating to an update progress of initiated updates in the FLM storage system 82. The FLM system 80 may be operative to provide information relating to the triggered update processes to the SCADA system 60, e.g., by informing the SCADA system 60 of update processes that were completed and/or newly installed firmware versions.

The FLM system 80 comprises one or several FLM processing circuits 83.

The one or several FLM processing circuits 83 are operative to perform a device identification 84. The device identification 84 is operative to determine a set of devices to be updated. Thus, the at least one FLM processing circuit 83 is operative to determine a device set comprising or consisting of the devices that are to be updated, from among the devices communicatively coupled to the SCADA system 60. The at least one FLM processing circuit 83 may be operative to access data stored in the FLM or storage system 82, such as the data defining the presently installed firmware versions and data defining available firmware updates, to determine a device set. The at least one FLM processing circuit 83 may optionally be operative to determine estimated update durations, using historical information stored on the FLM storage system 82.

The one or several FLM processing circuits 83 are operative to perform an FLM interface control 86. The FLM interface control 86 may be operative responsive to a result of the device identification 84. The FLM interface control 86 may be operative to control the at least one FLM system interface 81 to generate the first data 88, which comprises identifiers for all devices in the identified device set (i.e., for the devices to be updated) or other information defining the devices of the identified device set. The FLM interface control 86 may control the at least one FLM system interface 81 such that the first data 88 additionally includes the estimated update durations. The estimated update durations may be different for different device types, device hardware configurations, or presently installed firmware versions. The estimated update durations may be determined using regression techniques (such as multivariate regression) or other techniques, based on the size of the update to be installed, the hardware configuration of the device on which the update is to be installed, and the update durations, updates sizes, and hardware configurations for historical updates that were already completed successfully.

The FLM interface control 86 may also be operative to control the at least one FLM interface 81 to enable receipt and processing of the second data 69 from the SCADA system 60. The at least one FLM processing circuit 83 may be operative to process the second data 69 to establish a sequence in which the devices included in the device set are to be updated. This may comprise an ongoing process, in which different subsets of the device set are respectively identified as new messages of a plurality of messages comprised by the second data 69 are received from the SCADA system 60.

The at least one FLM processing circuit 83 is operative to perform an update triggering 85 to trigger the updates, e.g. to trigger retrieval of update data and/or installation of updates, by the devices to be updated. The update triggering 85 may be implemented responsive to the second data 69 received from the SCADA system. For illustration, the update triggering 85 may generate commands that trigger the update process for a subset of the device set, with the subset being defined by the second data 69 (such as a message of a plurality of messages forming the second data 69). The update triggering 85 may control the FLM interface control 86, which may in turn cause the FLM system interface or interfaces 81 to output the commands 89 to trigger update processes in at least a subset of the device set.

The at least one FLM processing circuit 83 may optionally be operative to perform an update monitoring 87. The update monitoring 87 may be based on progress reports received from the devices to be updated. The update monitoring 87 may comprise checking and confirming successful completion of update installation and/or recording update duration. This information may be aggregated by the FLM system 80. At least part of the aggregated information, the data derived from the collection of reports received, may be stored in the FLM storage system 82 for subsequent use. The FLM system 80 may use the update reports to inform the SCADA system 60 of firmware updates that have been successfully implemented and/or for improving the model used to estimate installation durations for future updates.

The at least one FLM processing circuit 83 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

Figure 3 shows a block diagram representation of the SCADA system 60.

The SCADA system 60 comprises an at least one SCADA system interface 61. The at least one SCADA system interface 61 may be operative to receive the first data 88 defining a device set of devices to be updated. The first data 88 may optionally also comprise estimated update durations. The SCADA system 60 may be operative to receive the first data 88 from the FLM system 80. The at least one SCADA system interface 61 may be operative to output the second data 69 to the FLM system 80. The second data 69 may define subsets of devices to be updated, e.g., in the form of an ordered list. The ordered list may be included in several messages comprised by the second data 69 and output in a time-sequential manner by the SCADA system 60.

The SCADA system 60 may optionally comprise a human machine interface (HMI) 62. The SCADA system 60 may be operative such that information relating to the update sequence, such as information on devices to be updated as a group in a given time interval, may be output via the HMI 62.

The SCADA system 60 may comprise a SCADA storage system 63. The SCADA storage system 63 may have stored operational states of the devices communicatively coupled to the SCADA system 60. The SCADA storage system 63 may have stored therein information on redundant implementations of functions performed by the devices, if present, and their operational state (i.e., whether the redundant implementation is running or not). The SCADA storage system 63 may have stored therein information on primary equipment, such as switchgear states (e.g., circuit breaker states), tap changer position(s), transformer states, etc. Such data may be obtained from measurement instrumentations or inferred from measurements or from IEC 61850-conformant messages.

The SCADA system 60 comprises one or several processing circuits 64. The one or several processing circuits 64 are operative to execute at least one update sequence determination 70 to determine, based on the received first data 88 and operational data available to the SCADA system (such as the data in the SCADA storage system 63) which of the devices specified by the first data 88 are to be updated at what time. The SCADA system 60 may take into account one or both of criticality of the device for system safety and device operational state when determining which of the devices specified by the first data 88 are to be updated at what time. For illustration, the SCADA system 60 may define subsets of the device set based on whether devices are in an operational state that is not a fully operative field operation state (such as a maintenance mode that is clearly different from the fully operative field operation state) and/or whether there are redundant implementations of all safety-critical functions performed by a device, with the redundant implementations being operative (i.e., not in a state in which there is no guarantee that they will successfully kick in as needed). Devices that are in maintenance mode and devices for which there are redundant implementations of all safety-critical functions may be included in a subset for which the FLM system 80 may initiate the update processes. The update sequence determination 70 may cause the SCADA interface control 65 to generate and output, via the at least one SCADA system interface 61, a message of the second data 69 that defines the subset for which the update process can be triggered.

The SCADA system 60 may use additional or alternative techniques to determine which devices are to be updated at what times. The SCADA system 60 may in particular be operative to perform the processing described in association with the processing system disclosed in EP23177537.0 filed by Hitachi Energy Switzerland AG on June 6, 2023, and entitled "METHOD AND PROCESSING SYSTEM FOR CONTROLLING A TRANSFER AND/OR A MODIFICATION OF MACHINE-READABLE DATA PROCESSED BY DEVICES OF AN AUTOMATION CONTROL SYSTEM, AND METHOD OF CONTROLLING AN INFRASTRUCTURE SYSTEM".

For illustration, the update sequence determination 70 may be operative to process a time series of generator unit commitments and load data to forecast generator unit commitment and load power over a predictive time horizon. Based on the forecast generator unit commitment and load power, the update sequence determination 70 may determine times for modifying the various devices in such a manner that the modification (e.g., a software or firmware update) is performed within a time interval at which the generator unit commitment and load power as forecast over the predictive time horizon indicate that the respective device may be taken out of its normal fully operational state without compromising operation safety of the primary system 20.

The update sequence determination 70 may be operative to use at least one trained machine learning (ML) model to perform the forecast. Corresponding techniques of processing a time series of observations into time series of forecast values are available to the skilled person. For illustration, recurrent neural network structures may be used. The ML model may comprise one or several units, such as a long short term memory (LSTM) cells (e.g., a stack of LSTM cells), to process the timeseries of observations into time series of forecast values of generator unit commitment and/or load powers.

The one or several SCADA processing circuits 64 may be operative to execute the SCADA interface control 65 responsive to the determined update sequence. The SCADA interface control 65 may be operative to control the at least one SCADA system interface 61 based on the determined update sequence and/or a command sequence determined by a command sequence determination 75.

The one or several SCADA processing circuits 64 may be operative to perform a command sequence determination 75, based on the received first data 69 and system operation of the automation control system 40 available to the SCADA system 60 (e.g., in the SCADA storage system 63). The command sequence determination 75 may comprise determining a sequence of control actions to be executed by the SCADA system 60 in a manner coordinated with the update processes triggered by the FLM system 80. The sequence of control actions may comprise commands that place a device into maintenance mode, allowing the device to install a firmware update if the device is determined to be non-critical (e.g., because there are running redundant function implementations for all safety-relevant functions), and return the device to its normal fully operational mode after successful completion of the firmware update (which may be reported to the SCADA system 60 by the FLM system 80). The sequence of control actions may comprise control actions affecting the primary system (i.e., not being limited to the secondary system).

The at least one processing circuit 64 may be operative to store reports on performance of the updates in the SCADA system storage 63 for future use. For illustration, the update sequence determination 70 may be updated in an ongoing manner during field use of the SCADA system 70, based on the performance reports received and stored in the SCADA system storage 63. The performance reports may be received from the FLM system 80.

The at least one processing circuit 64 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

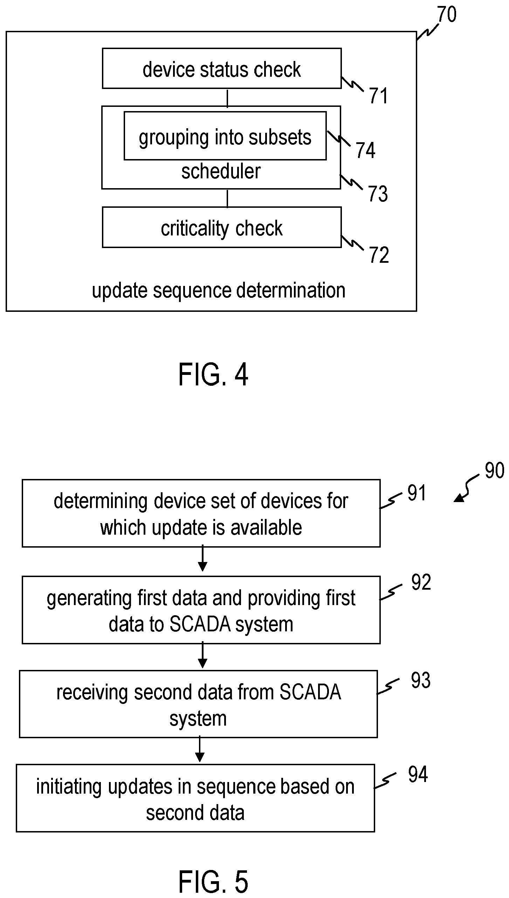

Figure 4 is a block diagram representation of an implementation of the update sequence determination 70. The update sequence determination may be implemented such that devices to be updated are identified based on an operational state of the devices (e.g., whether the devices presently in the maintenance mode) and/or based on whether there are redundant implementations of the safety-critical functions of the devices of the devices otherwise not critical for safe system operation at a given time. The update sequence determination may comprise a device status check 71. The device status check 71 may be operative to access device operational states for those devices included in a device set of devices to be updated determined by the FLM system 80.

The update sequence determination may comprise a criticality check 72. The criticality check 72 may determine which of the devices specified by the FLM system 80 as being devices to be updated are considered to be not safety-critical. The criticality check 72 may be implemented by or may comprise a check whether all safety-critical functions of a device have redundant implementations in other devices.

The update sequence determination may comprise a scheduler 73 which determines which ones of the devices identified as being devices to be updated are to be updated at what time. The scheduler 73 may comprise a grouping process 74 that groups devices into subsets. For illustration, when the scheduler 73 is invoked, the grouping process 74 may identify all those devices which are presently in maintenance mode or which are presently not safety-critical. Information on a subset including these identified devices may be provided for use in triggering the update process. The scheduler 73 may be invoked repeatedly, e.g. in an intermittent (periodic or aperiodic) manner, until all devices specified by the first data 88 have been dealt with.

Figure 5 is a flow chart of a method 90. The method 90 may be performed automatically by the FLM system 80.

At process block 91, the FLM system 90 determines a device set comprising or consisting of all devices for which an updated firmware (or other updates of machine-readable code) is available. Process block 91 may also comprise determining, by the FLM system 90, estimated update durations for the devices.

At process block 92, the FLM system 90 generates first data that defines all devices of the device set and provides the first data to the SCADA system 60. The first data may also comprise the estimated update durations or indicators for the estimated update durations.

At process block 93, the FLM system 90 receives second data from the SCADA system 60. The second data may comprise one or several messages, with each of the messages defining at least one subset of the devices. The second data may optionally also comprise a timing information specifying at which times update processes are to be initiated.

At process block 94, the FLM system 90 establishes a time sequence in which the various devices of the device set are to be updated and initiates the update processes in accordance with the established sequence.

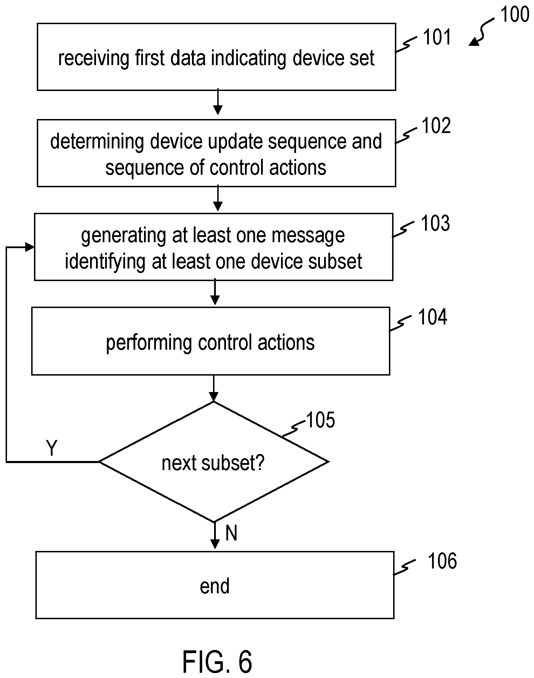

Figure 6 is a flow chart of a method 100. The method 100 may be performed automatically by the SCADA system 60.

At process block 101, the SCADA system 60 receives the first data from the FLM system. The first data indicates all devices to be updated, included in a device set determined by the FLM system 80. The first data may optionally also comprise estimated update durations for the devices included in the device set.

At process block 102, the SCADA system 60 determines a sequence in which the devices are to be updated. The SCADA system may also determine a sequence of control actions performed in a manner interleaved with the update processes. The determination at process block 102 may be performed based on device status information, such as operational states of the devices and/or the presence of running redundant function implementations. The determination at process block 102 may also be performed based on primary equipment data, such as one or several or all of: current, voltage, or PMU measurements, circuit breaker and/or other switchgear states, tap changer positions, transformer conditions, generator unit commitment, load levels, without being limited thereto.

At process block 103, the SCADA system 60 generates at least one message. The at least one message is transmitted to the FLM system 80. The at least one message identifies at least one subset of the device set specified by the first data.

At process block 104, the SCADA system 60 performs control actions in the coordination with the update processes of the devices specified in the at least one message. The control actions may comprise controlling some or all devices of the device subset to enter a maintenance mode. The control actions may comprise controlling some or all devices of the device subset to return from the maintenance mode to a fully operational mode after the update has been installed successfully. The control actions may comprise commands that cause states of primary system components (such as electric power system components, e.g., switchgear, transformers, and/or other primary system components) to change their states. Thereby, the primary system may be influenced in such a manner that the devices controlled by the SCADA system can be safely updated.

At process block 105, the SCADA system determines whether any devices have not yet been addressed. This may comprise comparing a union of all subsets that have already been determined with the device set specified by the first data. If all of the devices have been addressed, the method ends at process block 106. Otherwise, the method may return to process block 103.

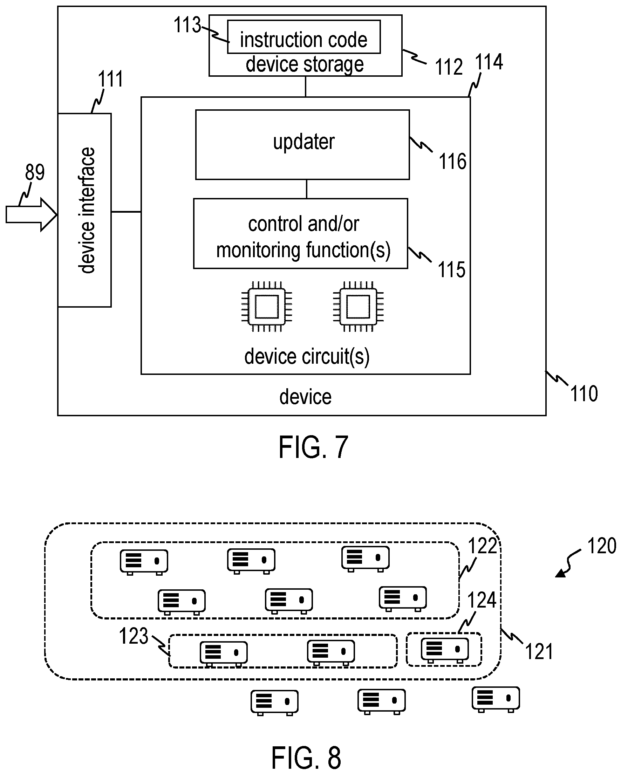

Figure 7 is a block diagram of a device 110. The configuration of the device 110 may be used for some or all of the devices of the automation control system 40.

The device 110 comprises a device interface 111 operative to receive machine-readable data. The machine-readable data may comprise an update for software or firmware persistently stored in a device storage 112 of the device 110. The device storage 112 may have stored therein the instruction code 113.

The device 110 comprises one or several device circuits 114. The one or several device circuits 114 are operative to perform a control and/or monitoring function related to a primary system component of the primary system 20. The one or several device circuits 114 may be operative such that the control and/or monitoring function processes measurements (such as measurements of electric characteristics or quantities derived therefrom) to determine a control action to be performed on the primary system component. In one implementation, the control and/or monitoring function may comprise a protection function, such as a distance protection function. In this case, the control action may comprise a switchgear trip, such as a circuit breaker trip or a switch trip. In another implementation, the control and/or monitoring function may be operative to control a tap changer. In the latter case, the control action may comprise a change of the tap changer position.

Generally, the device 110 may execute a logic to process measurements obtained in the primary system 20 into control actions for the primary system 20 or one of its components. The logic may be defined by the instruction code 113 stored in the device storage 112.

The one or several device circuits 114 may be operative to execute an updater 116. The updater 116 may be operative to modify the instruction code 113 based on the received machine-readable data. The updater 116 may be operative to trigger the update process in accordance with an update sequence determined by the SCADA system 60 in communicative interaction with the FLM system 80. The device 110 may be operative to receive a command 89 from the FLM system 80. The updater 116 may be operative to retrieve the firmware update data and/or install the firmware update data responsive to the command 89. The command 89 may also comprise a start time, with the updater 116 being operative to start the update process at the start time. Thus, the start time is controlled by the FLM system 80 in communicative interaction with the SCADA system 60.

The one or several device circuits 114 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

Figure 8 is a schematic view to further explain and illustrate operation of the methods and systems according to embodiments. A plurality of devices 120 is communicatively coupled with the SCADA system 60. The FLM system 80 determines that a device set 121 of the devices is to be updated. This determination may comprise checking for which ones of the devices updated firmware versions are available. The SCADA system 60 or the FLM system 80 may determine different subsets 122, 123, 124 of devices, with all devices in any subset being in operational states and/or having a criticality that allow them to be updated jointly. The SCADA system say 60 may provide messages to the FLM system 80, with each of the messages relating to one (and only one) of the subsets. The FLM system may trigger the update process for the respective device subset, responsive to receipt of the message.

The communicative interaction of the FLM system 80 and the SCADA system 60 can ensure the availability of the criticality and operational status information as input to a firmware update process. The techniques disclosed herein can integrate the firmware update with operations executed by the SCADA system 60. The procedure can be implemented in various ways. In one implementation, the FLM system 80 sends to the SCADA system 60 a device set S of devices that require a firmware update, together with the estimated duration of applying the update to each device. The SCADA system 60 determines an update sequence and a list of control actions. For example, low-criticality devices (such as spare and idle relays) get updated first. The update sequence may be or may comprise a list of subsets of devices S₁, S₂, ..., Sₙ, which is a partition of the device set S. The list of control actions C₁, C₂, ..., Cₙ may comprise or may consist of operations that will be performed by the SCADA system 60 and are interleaved with the update process. For example, the FLM system 80 and SCADA system 60 may be operative such that the overall process will first update the devices in device subset S₁, then the SCADA system 60 performs the command(s) C₁, then the devices in device subset S₂ are updated, and this may be continued. The SCADA system 60 may transmit to the devices in the current update subset Sᵢ a command to enter in maintenance mode, where i is between 1 and n. This is not required for devices that are already in maintenance mode. The SCADA informs the FLM system 80 what is the subset Sᵢ of the devices that are ready to be updated in the current cycle. The FLM system 80 triggers the firmware updates to these devices. The devices apply the firmware update (e.g., by retrieval and/or installation). The devices report the update result to the FLM system 80. The FLM system 80 may collect the update results from the devices that were updated. The FLM system 80 may report to the SCADA system 60 that the current update cycle was completed successfully. The SCADA system 60 may send a command to the updated devices and set them to active mode. Finally, the SCADA system 60 can perform the command Cᵢ on the system to enable the updated devices and disable devices to be updated in the next cycle. The command(s) may effect control actions that also act on the primary system.

This technique ensures that the devices receiving a firmware update are not critical to the operation of the power system during the update. Moreover, a separation of functionalities between the FLM system 80 and the SCADA systems 60 is maintained, which is beneficial in view of safety considerations.

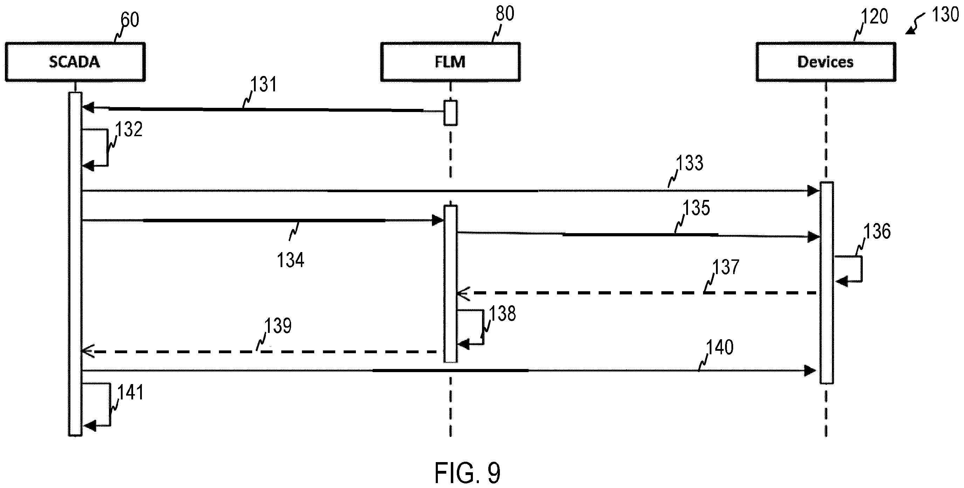

Figure 9 is a signaling diagram for a system 130 that comprises the SCADA system 60, the FLM system 80, and the devices 120 communicatively coupled to the SCADA system 60.

The techniques disclosed herein use the following aspects of the various components:

The SCADA system 60 is operative to control the criticality of the devices and set the devices in maintenance/active mode. In maintenance mode, the SCADA system 60 is aware that this device might not be responsive or functional for a period, caused by the installation of the firmware update.

The FLM system 80 is operative to provide the first data defining the list of devices that require a firmware update, and an estimation of the duration of the update per device. The FLM system 80 is operative to trigger the update process. The FLM system 80 may be operative to monitor and collect the outcome of the update process.

The devices 120 are operative to be controlled by SCADA system 60 and to receive a firmware update from the FLM system 80.

The system 130 may operate as follows:

The FLM system 80 sends first data 131 comprising a set S of devices to be updated to SCADA system 60, together with the estimated duration of the update per device. The estimated duration can be just the duration to switch from the old version to the new, or also include the time needed to download the new version to the device.

At 132, considering the set S of target devices to be updated and the update duration estimation, the SCADA system 60 determines an update sequence. The update sequence may comprise or may be a list of subsets S₁, S₂, ..., Sₙ and a list of control actions C₁, C₂, ..., Cₙ. The actions explained with reference to 133-141 are executed n times (i is between 1 and n), i.e., for each of the subsets of devices.

The SCADA system 60 sends a command 133 to the devices in the subset Sᵢ to set them in maintenance mode. No such command must be sent for devices that already are in maintenance mode.

The SCADA system 60 sends to the FLM system 80 the second data 134 or a message of the second data defining the subset Sᵢ of devices that are ready to be updated in this cycle.

The FLM system 80 receives the subset Sᵢ of devices available for this cycle and triggers the firmware update process. This may comprise transmission of a command 135.

The target devices receive from the FLM system 80 the trigger command 135 and perform the installation of the update at process block 136.

The devices may report back to the FLM system 80 the status and outcome of their update process. This may comprise receipt of report(s) 137 from the devices in the subset updated in the present cycle.

At process block 138, the FLM system 80 may collect the update outcomes from the devices updated in the present cycle. The FLM system 80 may aggregate the reports for further usage, such as storing in a historian and/or estimating update times.

If all the devices completed the firmware update successfully, then the FLM system 80 sends to the SCADA system 60 a message 139 that the devices in this cycle have successfully undergone the update.

The SCADA system 60 sends a command 140 to the updated devices and sets them back to active mode.

The SCADA system 60 performs the control action Cᵢ (e.g., open/close circuit breakers) that enables the operation of the updated devices in Sᵢ and disables the operation of the devices of the next cycle (Sᵢ₊₁).

The SCADA system 60 may determine the subsets of devices and the update sequence in various ways. The SCADA system 60 may be operative to determine the update sequence based on the set of devices to be updated and the estimated update duration for each device. The update sequence defines which devices will be updated in each update cycle. The update sequence may also be accompanied by or include a list of commands to be executed by the SCADA system 60 after each update cycle. The commands are not limited to commands that operate on the devices to be updated, but may also comprise commands that affect the primary system (such as by operating switchgear, transformers, an energy storage systems (ESS), tap changers).

Techniques that may be implemented by the SCADA system are discussed below:

The SCADA system 60 may be operative to leverage a redundancy of devices in the power system (e.g., double busbar). The SCADA system 60 may decide to first update devices in a backup schema (e.g., S₁ is the set of devices in the backup schema). Next, the SCADA system 60 is operative to change over the busbar to the redundant schema and allow the update of the devices in the main schema (e.g., C₁ activates the backup schema and disables the main schema and S₂ is the set of devices in the main schema). Finally, the SCADA system 60 is operative to change back to the main schema of operation (e.g., C₂ activates the main schema and disables the backup schema). Generating the redundancy-based update sequence can be performed automatically using a SCADA model. Generating the redundancy-based update sequence can comprise controlling the HMI 62 to enable operator input to determine the redundancy-based update sequence.

Alternatively or additionally, the SCADA system 60 may be operative to monitor the operational status of the devices. The SCADA system 60 may be operative such that devices currently inactive (e.g., current flow is 0) may be included in a first update cycle (i.e., S₁). The SCADA system 60 may be operative such that the remaining devices may be sorted based on the current flow and a threshold value is defined for the current flow. Once devices have a current lower than the threshold, they are considered for the next update cycle. For the devices that are never under the threshold, the SCADA system 60 may define a maintenance interval (using the update duration estimation) when these devices are updated.

Alternatively or additionally, the SCADA system 60 may be operative such that, at least for certain devices, the SCADA system 60 decides to not proactively execute control actions that disable these devices, and instead wait for certain planned control actions (e.g., planned maintenance). Once these planned control actions disable the target devices, the SCADA system 60 sets these devices in maintenance mode and notifies the FLM system 80 that the devices are ready to be updated (e.g., like a regular update cycle). The advantage of such an approach is that it reduces the number of control actions required to update the fleet by leveraging planned control actions. This technique is applicable for cases where the firmware update of the entire fleet is not time critical for all the devices and can be postponed for some devices until the planned control actions.

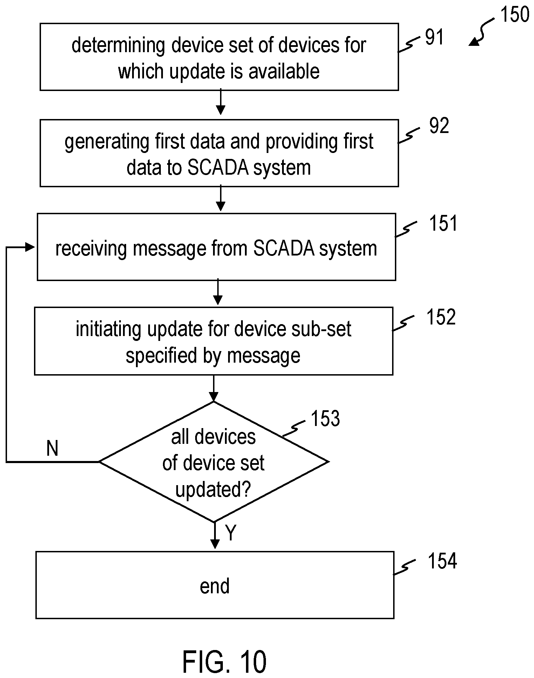

Figure 10 is a flow chart of a method 150, which can be performed automatically by the FLM system 80. In Figure 10, the second data 89 received by the FLM system from the SCADA system comprises separate messages that are received in a time-sequential manner, with each of the messages relating to one device subset.

Process blocks 91, 92 may be implemented as described in association with Figure 5.

At process block 151, the FLM system 80 receives a message from the SCADA system 60, with the message informing the FLM system 80 of a device subset that is ready to be updated.

At process block 152, the FLM system 80 initiates the update process for the devices of the device subset specified by the received message. This may comprise generating and issuing commands that cause the devices of the subset to retrieve and/or install update data.

At process block 153, the FLM system 80 determines whether all devices of the device set determined at 91 have been updated. If all devices of the device set have been updated, the method ends at process block 154. Otherwise, the FLM system 80 continues to monitor for further messages from the SCADA system 60 that inform the FLM system 80 of at least one further device subset for which the update process may be started.

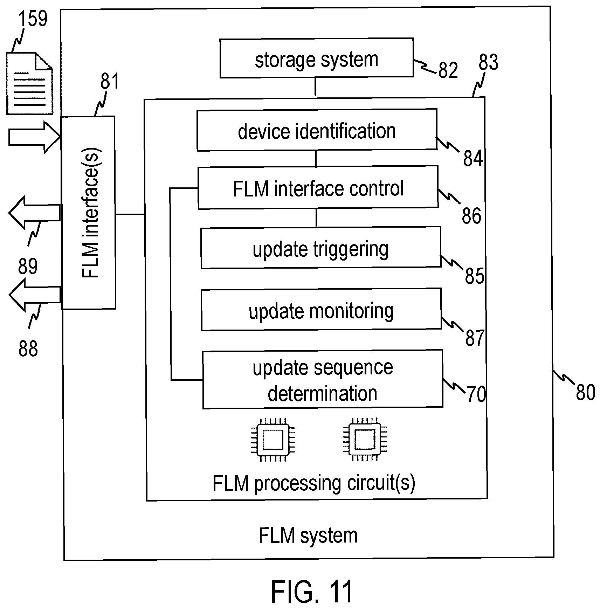

In the techniques discusses in association with Figure 2 to Figure 10, the FLM system 80 and the SCADA system 60 interact in a manner in which the SCADA system 60 uses the device status and/or criticality to determine a suitable update sequence, based on the data available at or to the SCADA system 60. In other implementations the FLM system 80 and the SCADA system 60 may interact in such a manner that the FLM system 80 retrieves data from the SCADA system which is suitable to determine the update sequence. This will be explained in more detail with reference to Figure 11 to Figure 13.

Figure 11 shows a variant of the FLM system 80. Components that may be operative as previously discussed are designated with the same reference signs. The FLM system 80 is operative to perform at least the update sequence determination 70. To determine the update sequence (which may comprise determining an ordered list of device subsets from the device set to be updated), the FLM system 80 may request the SCADA system 60 to provide second data 159 comprising SCADA data relating to the operational status and/or criticality of the devices. The update sequence determination 70 may use this SCADA system data as previously discussed (e.g., by organizing the device set into device subsets, based on criticality and/or operational status). Optionally, while not shown in Figure 11, the FLM processing circuit(s) 83 may be operative to perform at least part of the command sequence determination 75. The FLM system 80 may be operative to generate and output at least one message informing the SCADA system of the determined sequence of updates and, if determined by the FLM system 80, the determined sequence of commands/control actions. In another implementation, the command sequence determination 75 may still be performed by the SCADA system 60, using the update sequence determined by the FLM system 80.

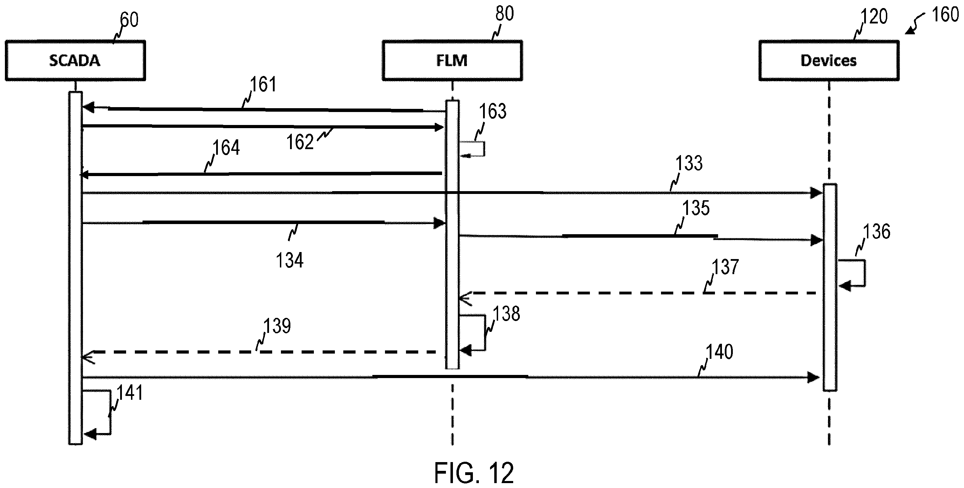

Figure 12 is a signaling diagram for a system 160 that comprises the SCADA system 60, the FLM system 80, and the devices 120 communicatively coupled to the SCADA system 60. The signaling diagram of Figure 12 may be applicable when at least the update sequence determination is performed by the FLM system 80, using SCADA data retrieved from the SCADA system 60. The system 130 may then operate as follows:

The FLM system 80 sends first data 161 comprising a set S of devices to be updated to SCADA system 60. It is possible but not required that the estimated duration of the update per device be included in the first data 131.

The FLM system 80 receives second data 163 comprising operational statuses and/or other relevant information (such as information on device criticality or redundant function implementations) from the SCADA system 60. The SCADA system 60 may provide this second data responsive to the first data 161.

At 163, considering the set S of target devices to be updated and the update duration estimation, the FLM system 80 determines an update sequence. The update sequence may comprise or may be a list of subsets S₁, S₂, ..., Sₙ.

The FLM system 80 provides at least the update sequence 164 to the SCADA system 60. The FLM system or, preferably, the SCADA system 60 may determine a list of control actions C₁, C₂, ..., Cₙ.

The actions previously explained with reference to 133-141 may then be executed n times (i is between 1 and n), i.e., for each of the subsets of devices. Reference is made to the explanations provided above as regards an implementation of these processing and signaling operations.

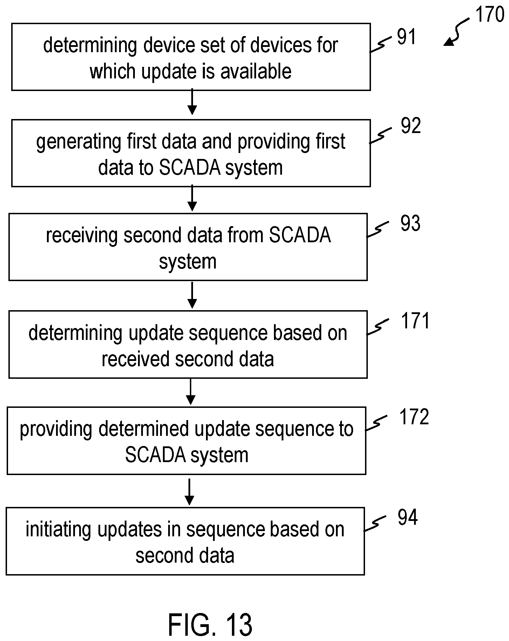

Figure 13 is a flow chart of a method 170, which can be performed automatically by the FLM system 80. In Figure 13, the second data 89 received by the FLM system from the SCADA system comprises SCADA system data which is then used by the FLM system 80 to determine the update sequence.

Process blocks 91, 92 may be implemented as described in association with Figure 5.

At process block 93, the FLM system 80 receives second data from the SCADA system 60, with the second data comprising SCADA data useful for determining the update sequence. The SCADA data may comprise operational statuses of the devices to be updated and/or of primary system components associated with the devices.

At process block 171, the FLM system 80 uses the SCADA system data received from the SCADA system 60 to determine the update sequence. The determined update sequence may take into consideration system criticality, such as redundant implementations that may be present in the automation control system and/or the primary system. The criticality may also depend on primary equipment status (such as current flows, power flows, switchgear states, tap changer states).

At process block 172, the FLM system 80 provides at least the determined update sequence to the SCADA system 60. The SCADA system 60 may use the update sequence determined by the FLM system 80 to determine control actions to be performed to change devices and, optionally, primary system components, such as switchgear.

At process block 94, the FLM system 80 initiates the update process for the devices in accordance with the determined update sequence. This may comprise generating and issuing commands that cause the devices of the subset to retrieve and/or install update data.

In any one of the implementations discussed herein, the FLM system 80 and/or the SCADA system 60 may be operative such that logics (such as the update sequence determination 70 and/or the command sequence determination 75) may be adjusted during field operation of the FLM system 80 and the SCADA system 60. This allows the logics to be modified based on field observations relating to the update processes, thereby further improving the update control and the system operation.

Figure 12 is a schematic diagrammatic representation of one or several processing circuit(s) that may be implemented in the FLM system 80 and/or the SCADA system 60. The one or several processing circuit(s) 64, 83 are operative to execute at least one logic to control the update processes of the devices communicatively interfaced with the SCADA system 60. The at least one logic may comprise the update sequence determination 70 and/or the command sequence determination 75.

The at least one processing circuit 64, 83 may be operative to perform an update performance monitoring 127 to monitor update performance. Update performance monitoring may comprise monitoring update durations for installing updates.

The at least one processing circuit 64, 83 may be operative to perform a scheduler logic modification 128 that modifies the logic executed to determine the update sequence and/or command sequence. For illustration, the scheduler logic modification may be operative to use update performance data in association with update metadata (such as update data size) to re-train an artificial intelligence (Al) model used by the logic to estimate the update durations. The Al model may have an input operative to receive update metadata and device hardware data (such as CPU-related data) and an output operative to provide the estimated update duration.

The logic may process measurements 180 obtained in the primary system 20 to determine the update sequence and/or command sequence. The measurements may comprise measurements of electric characteristics. The measurements may be obtained using measurement instrumentation, such as one or several phasor measurement units (PMUs) 181, one or several current transformers 11, and/or one or several voltage transformers 12. In one specific implementation, which was already discussed, current measurements obtained by phasor measurement units 181 and/or current transformers 11 may be used to determine the sequence in which devices are to be updated.

While the methods and systems have been described above in detail with reference to an automation control system of an electric power system, the techniques are not limited thereto. For illustration, the methods and systems may also be applied to other infrastructure systems, including other critical infrastructure systems, such as fresh water supply, heating fluid distribution, gas or oil distribution, or other distribution grids.

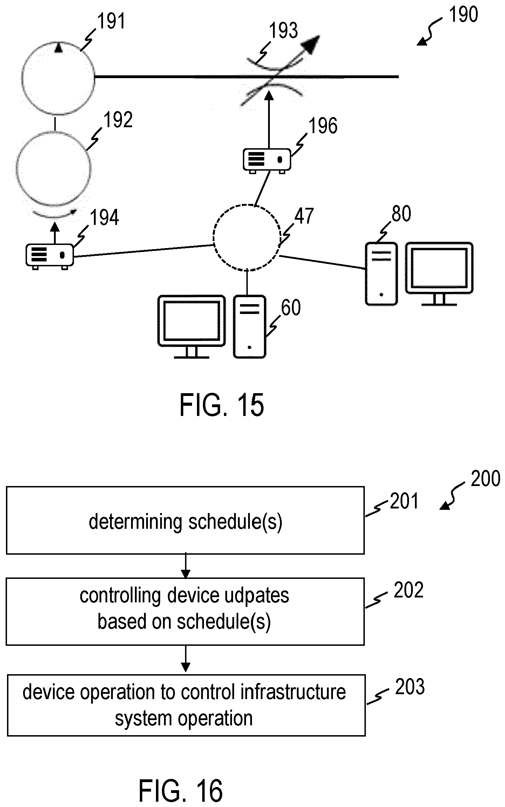

Figure 15 schematically illustrates a system 190 that comprises an infrastructure system comprising hydraulic components such as a pump 191 driven by a motor 192 and a controllable valve 193.

An automation control system comprises several devices 194 and 196 associated with primary system equipment. The SCADA system 60 and FLM system 80 are operative to control updates of the devices 194, 196 in a manner which takes into account operational statuses and/or criticality.

The techniques disclosed herein are generally operative to improve the process of updating devices communicatively coupled to and controlled by a SCADA system. Thereby, updates may be implemented in a more secure and more timely manner. This also improves operation of the devices and of the primary system with which the devices are associated. Accordingly, the techniques disclosed herein also extend to methods and systems of operating an infrastructure system or other primary system with the aid of an automation control system comprising the device.

Figure 16 is a flow chart of a method 200 according to an embodiment. The method 200 may be performed automatically by a system that comprises the SCADA system 60, the FLM system 80, and the devices 120.

At process block 201, the FLM system 80 and the SCADA system 60 communicatively interface with each other to determine a timing for triggering update processes of the devices 120.

At process block 202, the FLM system 80 controls the update processes. The SCADA system 60 may operate in coordination with the FLM system 80, by setting devices 120 to the maintenance mode and/or controlling switchgear or other primary system equipment.

At process block 203, the devices, updated in accordance with the received and installed updates, perform protection functions or other control functions related to the primary system. This may comprise controlling primary system components such as switchgear.

According to embodiments, there are provided processing systems that allow the FLM system 80 to interact with the SCADA system 60 to handle a firmware or software update process for distributed and fault tolerant systems in safety-critical applications, such as electrical substations and power systems.

Various effects and advantages are attained by the system and method according to embodiments. The system and method provide enhanced techniques of updating devices communicatively coupled with a SCADA system. Thus, the system and method according to embodiments address the need for implementing an automatic update process for potentially large fleets of devices, which is a key functionality for the future power systems industry, in the context of digitalization and cybersecurity risks. The system and method assist in ensuring that the latest security patches and functionality can be deployed to the field devices in a timely and efficient manner.

While embodiments have been described in detail with reference to the drawings, various modifications may be implemented in other embodiments. For illustration rather than limitation:
- While embodiments have been described in which the devices may be lEDs operative in accordance with IEC 61850, the techniques disclosed herein may be used in association with fleets of other devices of automation control systems.
- While embodiments have been described in which the devices are operative to perform protection functions (such as distance protection), the techniques may also be used in association with fleets of devices that perform other functions, such as control functions different from distance protection functions. Examples include an energy management system (EMS) or power management system (PMS) useful in association with a power grid having renewable energy sources.
- While embodiments have been described in which firmware or software is updated in the devices, the techniques may also be used for adjusting other settings that affect device operation. For illustration, the techniques may be used to control the transfer and/or modification of setpoints of or a logic executed by an EMS and/or PMS.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures, and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of controlling an update of machine-readable data processed by devices (41-46; 120) communicatively coupled to a Supervisory Control and Data Acquisition, SCADA, system (60), the method comprising:
determining, by a fleet management, FLM, system (80), a device set (121) of the devices, wherein the device set (121) comprises devices to be updated;
communicatively interfacing, by the FLM system (80), with the SCADA system (60) to establish an update sequence for the devices included in the device set (121);
triggering, by the FLM system (80), update processes for the devices included in the device set (121) based on the established update sequence.

2. The method of claim 1, wherein communicatively interfacing by the FLM system (80) with the SCADA system (60) to establish the update sequence comprises:
generating, by the FLM system (80), first data comprising information on the devices to be updated included in the device set (121);
outputting, by the FLM system (80), the first data via at least one data interface;
receiving, by the FLM system (80), second data from the SCADA system (60) via the at least one data interface, the second data comprising information on at least a subset (122-124) of the device set (121); and
establishing, by the FLM system (80), the update sequence based on the second data.

3. The method of claim 2, wherein the first data comprises identifiers for all devices to be updated and/or estimated update durations.

4. The method of claim 2 or claim 3, wherein the second data defines an ordered list of several subsets (122-124) of the devices to be updated to define the update sequence.

5. The method of claim 4, wherein the second data comprises a plurality of messages received from the SCADA system (60), wherein each of the messages defines one of the subsets (122-124).

6. The method of claim 5, wherein receipt of a message of the plurality of messages causes the FLM system (80) to trigger the update process for the subset (122-124) defined by the message.

7. The method of any one of the preceding claims, wherein communicatively interfacing by the FLM system (80) with the SCADA system (60) to establish the update sequence comprises:
retrieving, by the FLM system (80), device status data for the devices included in the device set (121) from a storage system of the SCADA system (60) or accessible to the SCADA system (60),
wherein the FLM system (80) establishes the update sequence based on the retrieved device status data.

8. The method of any one of the preceding claims, further comprising:
receiving, by the FLM system (80), update reports via the at least one data interface; and
providing, by the FLM system (80), an aggregated update report aggregated from the received update reports to the SCADA system (60).

9. The method of any one of the preceding claims, wherein the devices comprise devices of an automation control system (40).

10. The method of claim 9, wherein the automation control system (40) comprises an electric power system automation control system, and wherein the devices comprise devices of the electric power system automation control system.

11. The method of any one of the preceding claims, wherein the update comprises a firmware update.

12. A fleet management, FLM, system (80) for controlling an update of machine-readable data processed by devices (41-46; 120) communicatively coupled with a Supervisory Control and Data Acquisition, SCADA, system (60), the FLM system (80) comprising:
at least one data interface (81); and
at least one processing circuit (83) operative to
determine a device set (121) of the devices, wherein the device set (121) comprises devices to be updated;
control the at least one data interface (81) to communicatively interface the FLM system (80) with the SCADA system (60) to establish an update sequence for the devices included in the device set (121);
trigger update processes for the devices included in the device set (121) based on the established update sequence.

13. The FLM system (80) of claim 12, operative to perform the method of any one of claims 1 to 11.

14. An electric power system, comprising:
an automation control system (40) comprising a plurality of devices (41-46; 120) operative to process machine-readable data;
a Supervisory Control and Data Acquisition, SCADA, system (60) operative to be communicatively coupled to the plurality of devices (41-46; 120); and
the FLM system (80) of claim 12 or claim 13 operative to be communicatively coupled to the SCADA system (60).

15. The electric power system of claim 14,
wherein the FLM system (80) is operative to
generate first data comprising information on the devices to be updated included in the device set (121),
transmit the first data to the SCADA system (60),
receive second data from the SCADA system (60), the second data comprising information on several subsets (122-124) of the device set (121), and
establish the update sequence based on the second data; and
wherein the SCADA system (60) is operative to
receive the first data,
retrieve, based on the information on the devices to be updated included in the first data, device status data for at least the devices to be updated,
determine, based on the device status data, the several subsets (122-124) of the device set (121) to specify the update sequence,
generate the second data based on the determined several subsets (122-124), and
transmit the second data to the FLM system (80).
